# EUROPEAN PATENT SPECIFICATION

(11) **EP 2 902 326 B1**
(45) Date of publication and mention of the grant of the patent: **24.08.2016**
(21) Application number: 14153673.0
(22) Date of filing: 03.02.2014
(51) Int. Cl.: B64G 5/00

(54) **Cryogenic fuelling system**
Kryogenes Betankungssystem
Système de ravitaillement en carburant cryogénique

(43) Date of publication of application: 05.08.2015
(73) Proprietor: RUAG Schweiz AG, 8052 Zürich (CH)
(72) Inventor: Eaton, Nicholas Charles, 8197 Rafz (CH)
(74) Representative: OK pat AG

(56) References cited:
- JP-U- S63 171 300
- US-A- 5 404 923
- Armand M Gosselin: "Automated Ground Umbilical Systems (AGUS) Project", NASA Technical Report KSC-2007-068, Conference Paper Space Visions Congress, 26-28 Apr. 2007, Cocoa Beach, FL, United States, 26 April 2007 (2007-04-26), XP055128400, Retrieved from the Internet: URL:http://ntrs.nasa.gov/archive/nasa/casi .ntrs.nasa.gov/20130011368.pdf [retrieved on 2014-07-11]
- Kurt Smith: "Design of the Core Stage Inter-Tank Umbilical (CSITU) Compliance Mechanism", NASA Technical Report KSC-2013-119 Kennedy Engineering Academy Accelerated Training Program Showcase, Oral/Visual Presentation, 1 September 2013 (2013-09-01), XP055128383, Retrieved from the Internet: URL:http://ntrs.nasa.gov/archive/nasa/casi .ntrs.nasa.gov/20130014287.pdf [retrieved on 2014-07-11]

## Description

### FIELD OF THE INVENTION

The present invention relates to a cryogenic fuelling system, in particular to a cryogenic fuelling system comprising a fuel hose for conveying a cryogenic medium between a launcher and a launch tower.

### BACKGROUND OF THE INVENTION

Launchers (also called launch vehicles) of payloads fuelled by cryogenic propellants require special fuelling systems - usually part of a launch pad - since the tanks holding such cryogenic propellants need to be continuously topped off before and right up to liftoff due to evaporation therein. This is particularly necessary as complex launch sequences (countdowns) may be interrupted by planned and unplanned holds to account for unforeseen problems. Fuelling systems must be designed and constructed to meet these types of servicing requirements both during launch and in the preparation period leading up to it.

An unintentional disconnection which occurs too early could be disastrous since it may affect the ability to empty the tank of fluid or vented gas. Unintentional disconnection could also pose a hazard to launch personnel. Possible causes of early disconnection are:
- Swaying of the external cryolines in strong winds, or large movements due to internal pressurization effects;
- Swaying of the launcher relative to the launch tower in strong winds or during transfer to the launch zone if unexpected braking/acceleration occurs;
- Ice formation on the lanyards or falling of ice from other parts onto the lanyards;
- Birds;
- Accidental contact with the fuel line at the launch site;
- Impact from another, unrelated, external disconnect system.

It is therefore desirable to maintain a connection between the launcher and fuelling system as long as possible before liftoff. Furthermore for safety reasons the fuelling system must also allow the tanks of the launcher to be emptied quickly in case of an aborted mission. However, reconnection of the fuel supply hoses after an aborted liftoff is complicated and therefore time consuming as often all support arms of the launch tower have been separated from the launcher, posing a great risk due to the delay in emptying the fuel tank of the launcher.

As a liftoff may be aborted very late, in order to address such aborted launches/ aborted liftoffs and to ensure the option of timely emptying the tanks of the launcher, the fuelling systems are connected with the launcher (preferably by a fuel supply hose) until launcher takeoff, i.e. separation of the launcher and disconnection of the fuel supply hose is actually triggered by the effective liftoff of the launcher by a certain vertical distance.

In a particularly advantageous implementation described for example in European Patent Application EP14153656.5, a fuel supply hose of the fuelling system is connected to the launcher by means of a cryogenic connector configured to disconnect at lift-off when the launcher moves away from the launch-tower. A lanyard attaches a connector locking ring to the launch tower and is pulled open by the action of the launcher liftoff. Once the connector is unlocked, the fuel supply hose drops by the effect of gravity and separates from the launcher. While this approach ensures that the fuel supply hose is separated only on effective takeoff, the fuel supply hose - with its connector etc. - poses a danger to the launcher upon takeoff after its separation as the exact trajectory of the dropping fuel supply hose is difficult to predict.

Known ground umbilical systems are described in NASA Technical Report KSC-2007-068 presented by Armand M. Gosselin at the Space Visions Congress, 26-28 April 2007, Cocoa Beach, FL, United States. Furthermore, the design of core stage inter-tank umbilical compliance mechanisms is described in NASA Technical Report KSC-2013-119 presented by Kurt R. Smith at the Kennedy Engineering Academy Accelerated Training Program Showcase, 3 May 2013, Cocoa Beach, FL, United States.

### TECHNICAL PROBLEM TO BE SOLVED

There exists therefore a clear requirement for a fuelling system with a fuel supply hose for conveying a cryogenic medium between launcher and a launch tower that prevents said fuel supply line from causing damage to the launcher at liftoff.

### SUMMARY OF THE INVENTION

The above-identified objective of the present invention is addressed by a fuelling system according to claim 1.

In a particularly preferable embodiment of the present invention, a retraction control unit is provided to control the retraction of the fuel supply hose as a function of the lift-off distance and/or the contour and/or the launch angle of the launcher; and/or the contour of the launch tower etc. so as to continuously ensure a clearance between the fuelling system and the launcher.

### ADVANTAGEOUS EFFECTS

The most important advantage of the present invention is that it allows the fuel supply hose to be kept connected to the launcher up to effective liftoff / separation thereby allowing the cryogenic fuel to be continuously topped up to compensate for evaporation and also allowing emptying of the fuel tank, while at the same time ensures that the separating fuel supply hose poses no threat to the launcher as it separates from the launch pad. The fuelling system of the present invention therefore greatly increases both functionality and security of existing cryogenic fuelling systems for payload launchers.

### BRIEF DESCRIPTION OF THE DRAWINGS

Further characteristics and advantages of the invention will in the following be described in detail by means of the description and by making reference to the drawings. Which show:
- Fig. 1: a schematic side view of a first embodiment of the fuelling system of the present invention connecting a launcher and a launch tower by means of a fuel supply hose;
- Fig. 2A: a schematic side view of the fuelling system of the present invention before liftoff;
- Fig. 2B: a schematic side view of a preferred arrangement of the fuelling system of the present invention, wherein the fuel supply hose is attached to the launcher higher than its attachment to the launch tower for providing a gravitationally self-induced flushing of the fuel supply hose;
- Fig. 3A: a side view of the fuelling system of the present invention before liftoff with its retraction system in a first, resting position;
- Fig. 3B: a side view of the fuelling system of the present invention shortly after initiation of liftoff;
- Fig. 3C: a side view of the fuelling system of the present invention during liftoff shortly after disconnection of the fuel supply hose from the launcher triggered by the vertical liftoff distance D of the launcher;
- Fig. 3D-F: side views of the fuelling system of the present invention during liftoff after disconnection of the fuel supply hose from the launcher with the retraction system activated for retracting the fuel supply hose to ensure a clearance between the fuelling system and the launcher and its payload.

Note: The figures are not drawn to scale, are provided as illustration only and serve only for better understanding but not for defining the scope of the invention. No limitations of any features of the invention should be implied form these figures.

### DESCRIPTION OF PREFERRED EMBODIMENTS

Certain terms will be used in this patent application, the formulation of which should not be interpreted to be limited by the specific term chosen, but as to relate to the general concept behind the specific term. The term launcher shall be used in its broad meaning covering all types of liquid propelled launch vehicles for payloads such as spacecrafts/ satellites etc. The term launch tower shall be used in the context of the present invention to refer to all types of launch pads/ platforms having a vertical service structure facilitating the fueling of the launcher, such towers having in common that immediately before ignition of the launcher, all connections but the fuel supply between the tower and the launcher must be removed to prevent damage to the structure or vehicle.

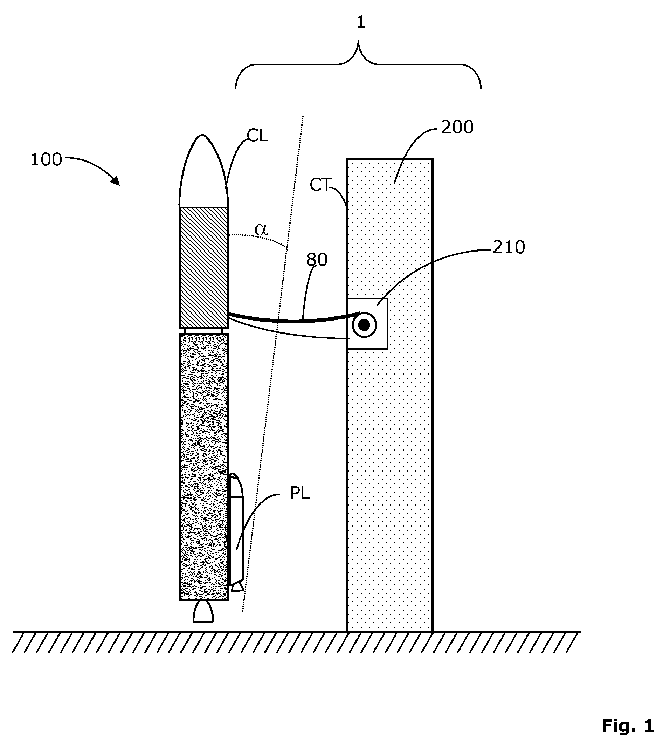

The general layout of the fuelling system 1 of the present invention connecting a launcher 100 and a launch tower 200 shall be now explained with reference to Fig. 1 which shows a schematic side view thereof. For simplicity reasons, elements of no particular importance for defining the present invention have been omitted form the figures. As illustratively shown on Fig. 1, the payload PL is attached to the launcher 100 on a launch site, besides the launch tower 200. The launcher 100 is then connected with the launch tower 200 by means of a fuel supply hose 80 for conveying a cryogenic medium there between. The fuel supply hose 80 is of a known type of supply hose for cryogenic fuels configured to withstand the extreme temperatures of the conveyed medium and to minimize heat loss to its surroundings. For these requirements, such a fuel supply hose 80 may weigh up to 100kg. It shall be pointed out that the fuel supply hose 80 is configured to be able to not only convey fuel from the fueling system 1 to the launcher 100 but also vice-versa, for example to empty the fuel tank of the launcher 100.

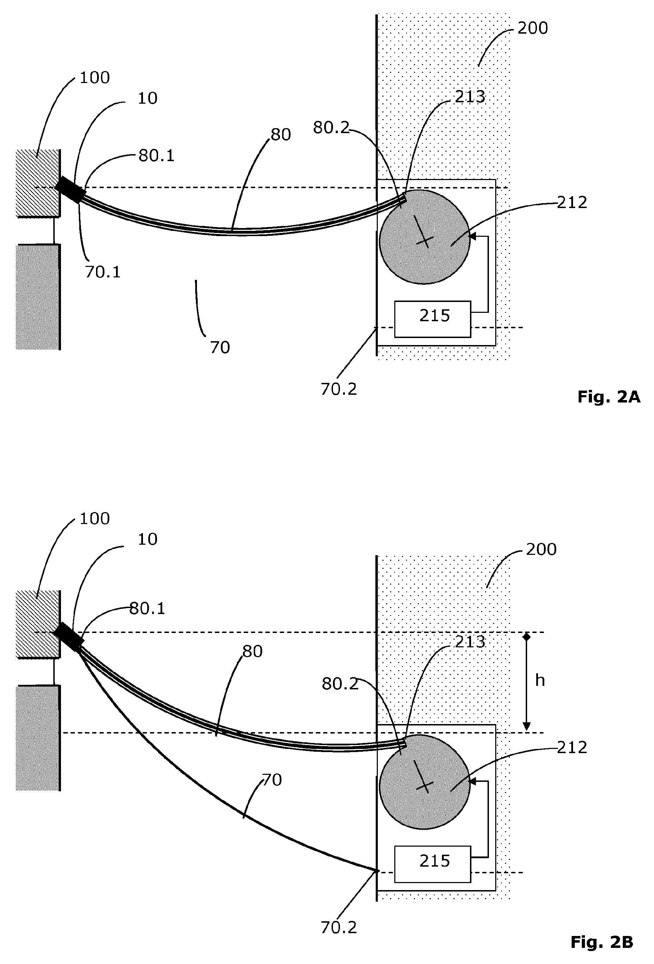

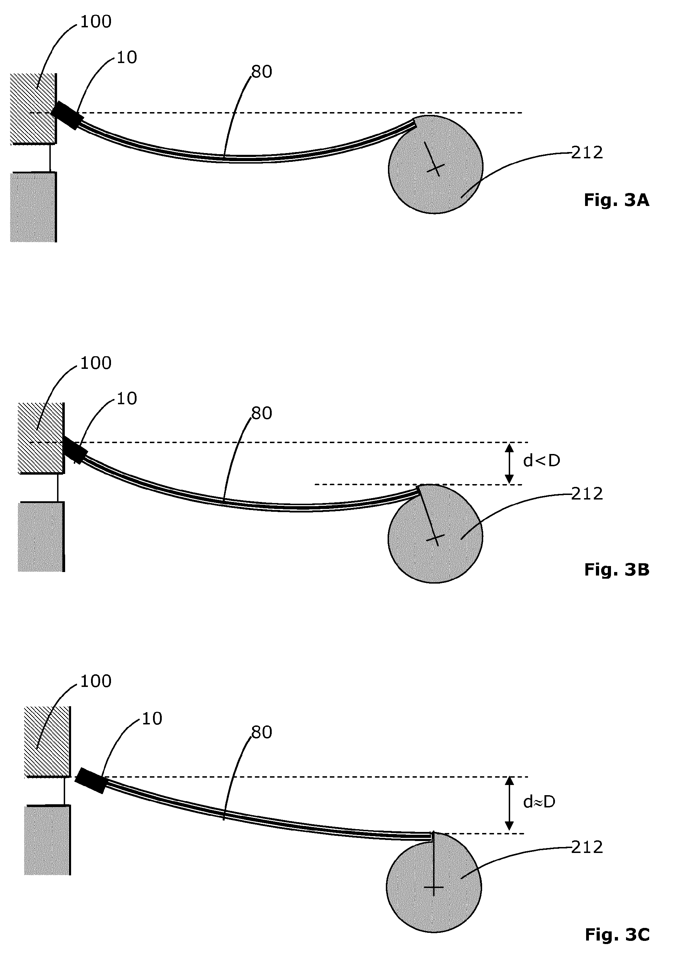

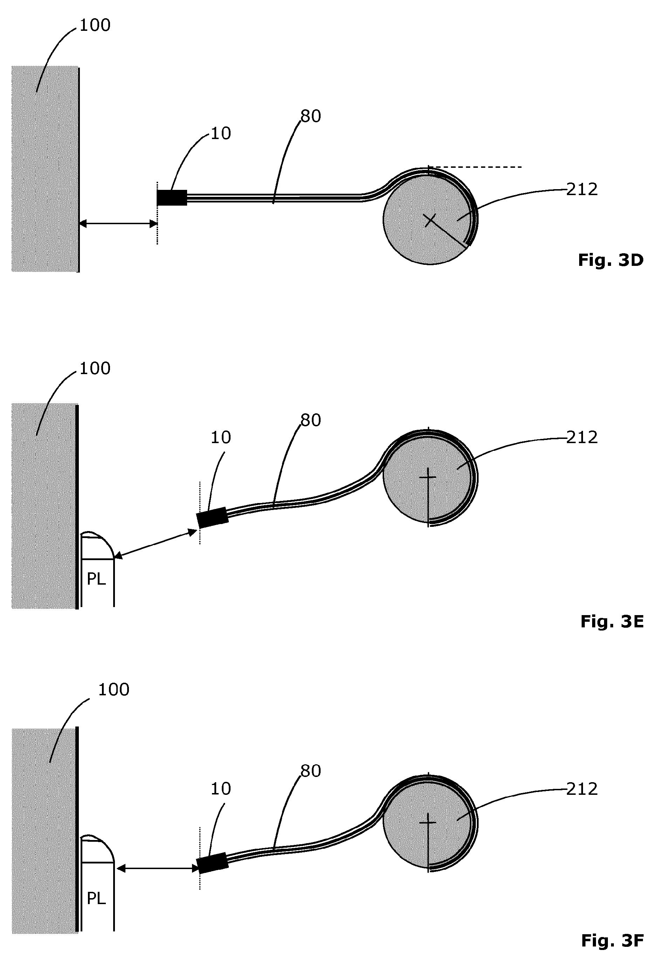

As it shall be described in detail with reference to figures 2A through 3F, a first end of the fuel supply hose 80 is releasably connectable to the launcher 100 such as to release at its lift-off, thereby allowing separation of the fuel supply hose 80 from the launcher 100.

For securing a sufficient clearance between the launcher 100 during liftoff and the fuelling system 1, in particular the fuel supply hose 80, a retraction system 210 is provided for automatically retracting the fuel supply hose 80 upon lift-off of the launcher 100.

Fig. 1 also illustratively shows the launch angle α of the launcher at liftoff. This angle is of great importance in calculating the sufficient clearance between the launcher 100, the launch tower 200 and elements of the fuelling system 1 during liftoff. A further very important parameter to consider in ensuring sufficient clearance are the contour of the launcher 100 launcher contour CL respectively the contour of the launch tower 200, tower contour CT, both illustratively depicted on Fig. 1. Therefore the retraction control unit 215 is configured to control the retraction of the fuel supply hose 80 as a function of one or more of the following:
- a lift-off distance d of the launcher 100; and/or
- a launcher contour CL of the launcher 100; and/or
- a launch angle (α) of the launcher 100; and/or
- a tower contour CT of the launch tower 200
so as to continuously ensure a clearance between the fuelling system 1 and the launcher 100.

Figures 2A and 2B depict preferred embodiments of the fuelling system 1, wherein a first end 80.1 of the fuel supply hose 80 is releasably connectable to the launcher 100 by means of a cryogenic connector 10, the cryogenic connector 10 being configured to be releasable at lift-off of the launcher 100. In particular, the fuel supply hose 80 is releasable from the launcher 100 by means of a lanyard 70 connected at a first end 70.1 to the cryogenic connector 10 and at an opposing second end 70.2 to the launch tower 200, the lanyard 70 acting on a release device of the cryogenic connector 10 upon lift-off of the launcher 100. Details of such a cryogenic connector 10, realeasable by the action of a lanyard 70, are known from European Patent Application No. EP14153656.5.

In addition, the preferred embodiments of the retraction system 210 depicted on the figures comprise a hose wheel 212 with a tower-side hose interface 213 for receiving the second end 80.2 of the fuel supply hose 80, the hose wheel 212 being configured to wind up the fuel supply hose 80 at lift-off of the launcher 100.

Fig. 2B depicts a schematic side view of a particularly preferred arrangement of the fuelling system 1, wherein the fuel supply hose 80 is attached to the launcher 100 a vertical distance h above said tower-side hose interface 213 and/or a torque preload is applied on the hose wheel 212 such as to ensure that the fuel supply hose 80 is downwards oriented for providing a gravitationally self-induced flushing of the fuel supply hose 80. In this way it can be ensured that no fuel is left in the fuel supply hose 80 at liftoff, an essential security measure can be therefore achieved without the need of any additional flushing means.

The sequence of figures 3A to 3F illustrates the fuelling system 1 of the present invention before, at the initiation of and during liftoff of the launcher 100.

Fig. 3A shows a side view of the fuelling system 1 before liftoff with its retraction system 210 in a first, resting position.

On Fig. 3B, showing a side view of the fuelling system 1 and launcher 100 shortly after initiation of liftoff, the launcher 100 has already travelled a vertical distance d from its pre-liftoff position of Fig. 3A, this distance d being less than the vertical liftoff threshold distance D at which the fuel supply hose 80 separates from the launcher 100.

The moment of disconnection is depicted on Fig. 3C which shows a side view of the fuelling system 1 of the present invention shortly after disconnection of the fuel supply hose 80 from the launcher 100 triggered by the vertical liftoff distance d being greater than the vertical liftoff threshold distance D of the launcher 100. As it can be observed on this figure, the retraction system 210 is activated immediately upon separation of the fuel supply hose 80 from the launcher 100 - in order to avoid a collision therebetween.

In preferred embodiments of the present invention using lanyard 70 releasable cryogenic connectors 10 to connect the fuel supply hose 80 to the launcher 100, the retraction of the fuel supply hose 80 by the retraction system 210 is triggered by a sudden drop of tension on said lanyard 70 due to the release of the cryogenic connector 10 upon the launcher 100 reaching a predetermined lift-off distance D.

The sequence of figures 3D through 3F depict side views of the fuelling system 1 during liftoff of the launcher 100 (with the payload PL) after disconnection of the fuel supply hose 80 from the launcher 100 with the retraction system 210 activated for retracting the fuel supply hose 80 to ensure a clearance between the fuelling system 1 and the launcher 100 and its payload PL.

In a further embodiment, the fuelling system 1 further comprises a hose retention system for retaining the fuel supply hose 80 after take-off of the launcher 100 in order to hold the fuel supply hose 80 securely in its retracted position.

It will be understood that many variations could be adopted based on the specific structure hereinbefore described without departing from the scope of the invention as defined in the following claims. For example more than one hose may be provided between the launcher 100 and the launch tower 200, such as an additional hose to convey vented gas from the launcher tank back to the ground.

**REFERENCE LIST:**

| | |
|---|---|
| Fuelling system | 1 |
| cryogenic coupling | 10 |
| lanyard | 70 |
| first end (of lanyard) | 70.1 |
| second end (of lanyard) | 70.2 |
| fuel supply hose | 80 |
| launcher | 100 |
| payload fairing | 102 |
| launch tower | 200 |
| fuelling system | 201 |
| retraction system | 210 |
| hose wheel | 212 |
| tower-side hose interface | 213 |
| retraction control unit | 215 |
| hose retention system | 220 |
| launch anqle | α |
| lift-off distance | d |
| vertical liftoff threshold distance | D |
| launcher contour | CL |
| tower contour | CT |
| payload | PL |

## Claims

1. Fuelling system (1) having a fuel supply hose (80) for connecting a launcher (100) and a launch tower (200),
wherein:
- the fuel supply hose (80) is configured for conveying a cryogenic medium between the launcher (100) and the launch tower (200);
- a first end (80.1) of the fuel supply hose (80) is releasably connectable to the launcher (100) such as to release at lift-off of the launcher (100) thereby allowing separation of the fuel supply hose (80) from the launcher (100); and
- a retraction system (210) is provided for automatically retracting the fuel supply hose (80) upon lift-off of the launcher (100),
**characterized in that** the retraction system (210) comprises a hose wheel (212) with a tower-side hose interface (213) for receiving a second end (80.2) of the fuel supply hose (80), the hose wheel (212) being configured to wind up the fuel supply hose (80) at lift-off of the launcher (100).

2. Fuelling system (1) according to claim 1
**characterized in that** the retraction system (210) comprises a retraction control unit (215) configured to control the retraction of the fuel supply hose (80) as a function of one or more of the following:
- a lift-off distance (d) of the launcher (100); and/or
- a launcher contour (CL) of the launcher (100); and/or
- a launch angle (α) of the launcher (100); and/or
- a tower contour (CT) of the launch tower (200)
so as to continuously ensure a clearance between the fuelling system (1) and the launcher (100).

3. Fuelling system (1) according to claim 1
**characterized in that** a torque preload is applied on the hose wheel (212) for applying a predefined tension on the fuel supply hose (80).

4. Fuelling system (1) according to claim 3
**characterized in that** the fuel supply hose (80) is arranged to be attached to the launcher (100) a vertical distance (h) above said tower-side hose interface (213) and/or said torque preload applied on the hose wheel (212) is configured such as to ensure that the fuel supply hose (80) is downwards oriented for providing a gravitationally self-induced flushing of the fuel supply hose (80).

5. Fuelling system (1) according to one of the preceding claims
**characterized in that** the fuel supply hose (80) is releasably connectable to the launcher (100) by means of a cryogenic connector (10), the cryogenic connector (10) being configured to be releasable at lift-off of the launcher (100).

6. Fuelling system (1) according to claim 5
**characterized in that** the fuel supply hose (80) is releasable from the launcher (100) by means of a lanyard (70) connected at a first end (70.1) to the cryogenic connector (10) and at an opposing second end (70.2) to the launch tower (200), the lanyard (70) acting on a release device of the cryogenic connector (10) upon lift-off of the launcher (100).

7. Fuelling system (1) according to claim 6
**characterized in that** the retraction of the fuel supply hose (80) by the retraction system (210) is triggered by a sudden drop of tension on said lanyard (70) due to the release of the cryogenic connector (10) upon the launcher (100) reaching a vertical liftoff threshold distance (D).

8. Fuelling system (1) according to one of the preceding claims
**characterized in that** a hose retention system is provided for retaining the fuel supply hose (80) after take-off of the launcher (100) in order to hold the fuel supply hose (80) securely in its retracted position.

## Patentansprüche

1. Betankungssystem (1) mit einem Kraftstoffzufuhrschlauch (80) zum Verbinden einer Trägerrakete (100) und eines Startturms (200),
wobei:
- der Kraftstoffzufuhrschlauch (80) dafür ausgelegt ist, ein kryogenes Medium zwischen der Trägerrakete (100) und dem Startturm (200) zu befördern;
- ein erstes Ende (80.1) des Kraftstoffzufuhrschlauchs (80) derart lösbar mit der Trägerrakete (100) verbunden werden kann, dass es sich beim Abheben der Trägerrakete (100) löst, wodurch eine Trennung des Kraftstoffzufuhrschlauchs (80) von der Trägerrakete (100) ermöglicht wird; und
- ein Einziehsystem (210) vorgesehen ist, um den Kraftstoffzufuhrschlauch (80) beim Abheben der Trägerrakete (100) automatisch einzuziehen,
**dadurch gekennzeichnet, dass** das Einziehsystem (210) ein Schlauchrad (212) mit einer turmseitigen Schlauchschnittstelle (213) zur Aufnahme eines zweiten Endes (80.2) des Kraftstoffzufuhrschlauchs (80) umfasst, wobei das Schlauchrad (212) dafür ausgelegt ist, den Kraftstoffzufuhrschlauch (80) beim Abheben der Trägerrakete (100) aufzuwickeln.

2. Betankungssystem nach Anspruch 1,
**dadurch gekennzeichnet, dass** das Einziehsystem (210) eine Einziehsteuereinheit (215) umfasst, die dafür ausgelegt ist, das Einziehen des Kraftstoffzufuhrschlauchs (80) als Funktion von einem oder mehrerem von Folgendem zu steuern:
- einer Abhebedistanz (d) der Trägerrakete (100); und/oder
- einer Trägerraketenkontur (CL) der Trägerrakete (100); und/oder
- einem Startwinkel (α) der Trägerrakete (100); und/oder
- einer Turmkontur (CT) des Startturms (200),
um kontinuierlich einen Freiraum zwischen dem Betankungssystem (1) und der Trägerrakete (100) zu gewährleisten.

3. Betankungssystem nach Anspruch 1,
**dadurch gekennzeichnet, dass** eine Drehmomentvorbelastung auf das Schlauchrad (212) ausgeübt wird, um eine vorbestimmte Spannung auf den Kraftstoffzufuhrschlauch (80) auszuüben.

4. Betankungssystem (1) nach Anspruch 3,
**dadurch gekennzeichnet, dass** der Kraftstoffzufuhrschlauch (80) derart angeordnet ist, dass er an der Trägerrakete (100) in einer vertikalen Distanz (h) über der turmseitigen Schlauchschnittstelle (213) befestigt ist und/oder die auf das Schlauchrad (212) ausgeübte Drehmomentvorbelastung derart ausgelegt ist, um zu gewährleisten, dass der Kraftstoffzufuhrschlauch (80) nach unten gerichtet ist, um ein schwerkraftbedingtes selbstinduziertes Spülen des Kraftstoffzufuhrschlauchs (80) zu ermöglichen.

5. Betankungssystem (1) nach einem der vorhergehenden Ansprüche,
**dadurch gekennzeichnet, dass** der Kraftstoffzufuhrschlauch (80) mittels eines kryogenen Verbinders (10) lösbar mit der Trägerrakete (100) verbunden werden kann, wobei der kryogene Verbinder (10) derart ausgelegt ist, dass er beim Abheben der Trägerrakete (100) gelöst werden kann.

6. Betankungssystem (1) nach Anspruch 5,
**dadurch gekennzeichnet, dass** der Kraftstoffzufuhrschlauch (80) von der Trägerrakete (100) mittels einer Leine (70) gelöst werden kann, die an einem ersten Ende (70.1) mit dem kryogenen Verbinder (10) und an einem entgegengesetzten zweiten Ende (70.2) mit dem Startturm (200) verbunden ist, wobei die Leine (70) beim Abheben der Trägerrakete (100) auf eine Lösevorrichtung des kryogenen Verbinders (10) einwirkt.

7. Betankungssystem (1) nach Anspruch 6,
**dadurch gekennzeichnet, dass** das Einziehen des Kraftstoffzufuhrschlauchs (80) durch das Einziehsystem (210) durch einen plötzlichen Spannungsabfall der Leine (70) ausgelöst wird, der auf das Lösen des kryogenen Verbinders (10) beim Erreichen einer vertikalen Abhebe-Schwellendistanz (D) durch die Trägerrakete (100) zurückzuführen ist.

8. Betankungssystem (1) nach einem der vorhergehenden Ansprüche,
**dadurch gekennzeichnet, dass** ein Schlauchrückhaltesystem vorgesehen ist, um den Kraftstoffzufuhrschlauch (80) nach dem Abheben der Trägerrakete (100) zurückzuhalten, um den Kraftstoffzufuhrschlauch (80) sicher in seiner eingezogenen Position zu halten.

## Revendications

1. Système d'alimentation en combustible (1) comprenant un tuyau d'alimentation en combustible (80) pour relier un lanceur (100) et une tour de lancement (200), dans lequel
- le tuyau d'alimentation en combustible (80) est configuré pour transporter un fluide cryogénique entre le lanceur (100) et la tour de lancement (200) ;
- une première extrémité (80.1) du tuyau d'alimentation en combustible (80) peut être raccordée de façon amovible au lanceur (100) de manière à être libérée au décollage du lanceur (100), permettant ainsi la séparation du tuyau d'alimentation en combustible (80) du lanceur (100) ; et
- un système de rétraction (210) est prévu pour rétracter automatiquement le tuyau d'alimentation en combustible (80) au moment du décollage du lanceur (100),
**caractérisé en ce que** le système de rétraction (210) comprend un enrouleur de tuyau (212) avec une interface de tuyau côté tour (213) pour recevoir une deuxième extrémité (80.2) du tuyau d'alimentation en combustible (80), l'enrouleur de tuyau (212) étant configuré pour enrouler le tuyau d'alimentation en combustible (80) au moment du décollage du lanceur (100).

2. Système d'alimentation en combustible (1) selon la revendication 1, **caractérisé en ce que** le système de rétraction (210) comprend une unité de commande de rétraction (215) configurée pour commander la rétraction du tuyau d'alimentation en combustible (80) en fonction de l'un ou plusieurs des éléments suivants :
- la distance de décollage (d) du lanceur (100) ; et/ou
- le profil (CL) du lanceur (100) ; et/ou
- l'angle de lancement (α) du lanceur (100) ; et/ou
- le profil (CT) de la tour de lancement (200)
de façon à garantir en permanence un espace entre le système d'alimentation en combustible (1) et le lanceur (100).

3. Système d'alimentation en combustible (1) selon la revendication 1, **caractérisé en ce qu'**un couple de précharge est appliqué sur l'enrouleur de tuyau (212) pour appliquer une tension prédéfinie sur le tuyau d'alimentation en combustible (80).

4. Système d'alimentation en combustible (1) selon la revendication 3, **caractérisé en ce que** le tuyau d'alimentation en combustible (80) est disposé de façon à être raccordé au lanceur (100) à une distance verticale (h) au-dessus de ladite interface de tuyau côté tour (213) et/ou **en ce que** ledit couple de précharge appliqué sur l'enrouleur de tuyau (212) est configuré de façon à garantir que le tuyau d'alimentation en combustible (80) est orienté vers le bas pour fournir une vidange auto-induite par la force gravitationnelle du tuyau d'alimentation en combustible (80).

5. Système d'alimentation en combustible (1) selon l'une des revendications précédentes, **caractérisé en ce que** le tuyau d'alimentation en combustible (80) peut être raccordé de façon amovible au lanceur (100) par le biais d'un connecteur cryogénique (10), le connecteur cryogénique (10) étant configuré pour pouvoir être libéré au décollage du lanceur (100).

6. Système d'alimentation en combustible (1) selon la revendication 5, **caractérisé en ce que** le tuyau d'alimentation en combustible (80) peut être libéré du lanceur (100) par le biais d'un cordon (70) raccordé au niveau d'une première extrémité (70.1) au connecteur cryogénique (10) et au niveau d'une deuxième extrémité opposée (70.2) à la tour de lancement (200), le cordon (70) agissant comme un dispositif de libération du connecteur cryogénique (10) au moment du décollage du lanceur (100).

7. Système d'alimentation en combustible (1) selon la revendication 6, **caractérisé en ce que** la rétraction du tuyau d'alimentation en combustible (80) par le système de rétraction (210) est déclenchée par une chute soudaine de tension sur ledit cordon (70) en raison de la libération du connecteur cryogénique (10) sur le lanceur (100) lorsque ce dernier atteint une distance seuil de décollage verticale (D).

8. Système d'alimentation en combustible (1) selon l'une des revendications précédentes, **caractérisé en ce qu'**il est prévu un système de retenue de tuyau pour retenir le tuyau d'alimentation en combustible (80) après le décollage du lanceur (100), afin de maintenir le tuyau d'alimentation en combustible (80) fixement dans sa position rétractée.
